# EUROPÄISCHE PATENTSCHRIFT

(11) **EP 2 648 902 B1**
(45) Veröffentlichungstag und Bekanntmachung des Hinweises auf die Patenterteilung: **15.03.2017**
(21) Anmeldenummer: 11796654.9
(22) Anmeldetag: 05.12.2011
(51) Int. Cl.: B32B 3/20, B32B 3/22, B32B 21/00, B32B 21/06, B32B 21/08, B32B 21/10, B32B 21/13, E04C 2/36

(54) **VERBUNDANORDNUNG AUS MINDESTENS ZWEI PARALLELEN DECKPLATTEN MIT DISTANZ- UND VERSTEIFUNGSMITTELN**
LAMINATE STRUCTURE OF AT LEAST TWO PARALLEL COVER PANELS WITH STIFFENING SPACER MEANS
STRUCTURE STRATIFIÉE AVEC AU MOINS DEUX PANNEAUX RECOUVRANTS PARALLELES AVEC PIECES D'ECARTEMENT ET DE RAIDISSAGE

(30) Priorität: 07.12.2010 DE 202010016304 U
(43) Veröffentlichungstag der Anmeldung: 16.10.2013
(73) Patentinhaber: Grod, Wassilij, 99423 Weimar (DE)
(72) Erfinder: Grod, Wassilij, 99423 Weimar (DE)
(74) Vertreter: Kruspig, Volkmar
(86) Internationale Anmeldenummer: PCT/EP2011/071716
(87) Internationale Veröffentlichungsnummer: WO 2012/076455

(56) Entgegenhaltungen:
- WO-A1-93/09947
- DE-A1- 2 444 460
- DE-A1- 2 836 418
- DE-U1-202008 002 337
- GB-A- 2 234 935
- US-A- 6 074 509

## Beschreibung

Die Erfindung betrifft eine Verbundanordnung aus mindestens zwei parallelen Deckplatten mit zwischen den Deckplatten eingeschlossenen und mit den Deckplatten verbundenen Distanz- und Versteifungsmitteln.

Derartige Verbundanordnungen werden insbesondere als wärmedämmende Leichtwände verwendet. Dabei besteht die Aufgabe, eine möglichst stabile und steife Anordnung zu schaffen, deren wärmedämmende Eigenschaften optimiert sind und deren innere Versteifung in Hinblick auf die spätere Verwendung variiert werden kann, wobei die Versteifung zugleich möglichst einfach gestaltet sein soll und die Verbundanordnung leicht zu fertigen ist.

Diese Aufgabe wird mit einer Verbundanordnung mit den Merkmalen des Anspruchs 1 gelöst. Die Unteransprüche enthalten zweckmäßige und vorteilhafte Ausführungsformen der erfindungsgemäßen Verbundanordnung.

Die Verbundanordnung besteht aus mindestens zwei parallelen Deckplatten mit zwischen den Deckplatten eingeschlossenen und mit den Deckplatten verbundenen Distanz- und Versteifungsmitteln. Diese sind in Form röhrenförmiger Elemente ausgebildet, wobei die Rohrlängsachsen der röhrenförmigen Elemente schräg zu den Oberflächennormalen der parallelen Deckplatten orientiert sind. Dadurch ist die gesamte Anordnung verweindungssteif und widerstandsfähig gegen Scher- und Biegekräfte, wobei die mechanischen Eigenschaften der Verbundanordnung durch die Anordnung der röhrenförmigen Elemente, insbesondere deren Muster und Dichte, sehr einfach vorherbestimmt werden können.

Bei einer zweckmäßigen Ausgestaltung weisen die Rohrlängsachsen der röhrenförmigen Elemente eine ortsabhängige Orientierung auf. Dies betrifft insbesondere den Neigungswinkel der Rohrlängsachsen bezüglich der Oberflächennormalen der Deckplatten und/oder die azimutale Richtung der Rohrlängsachsen bezüglich der durch die Deckplatten definierten Ebenen. Die durch die Rohrlängsachsen definierten Vektoren der röhrenförmigen Elemente bilden somit ein Vektorfeld, das sich an die zu erwartenden mechanischen Belastungen der Verbundanordnung anpassen und vielfältig variieren lässt.

Die röhrenförmigen Elemente sind nicht als vollständige Röhren ausgebildet. Es bestehen die röhrenförmigen Elemente jeweils aus längs aufgeschnittenen Zylindersegmenten.

Bei einer Ausführungsform bestehen die die rohrförmigen Elemente aus Holz- oder Bambusrohren. Derartige Anordnungen sind leicht, bestehen aus nachwachsenden Rohstoffen und sind daher außerdem besonders umweltverträglich.

Die Deckplatten sind jeweils in Abhängigkeit von der Ausführungsform aus einem Holzwerkstoff oder Holzverbundwerkstoff, einem Faser- oder Faserverbundwerkstoff, einem Textilwerkstoff oder einem Folienwerkstoff ausgebildet.

Bei einer Ausführungsform bilden die röhrenförmigen Elemente zusammen mit den Deckplatten einen in ein Folienmaterial eingeschweißten Verbund.

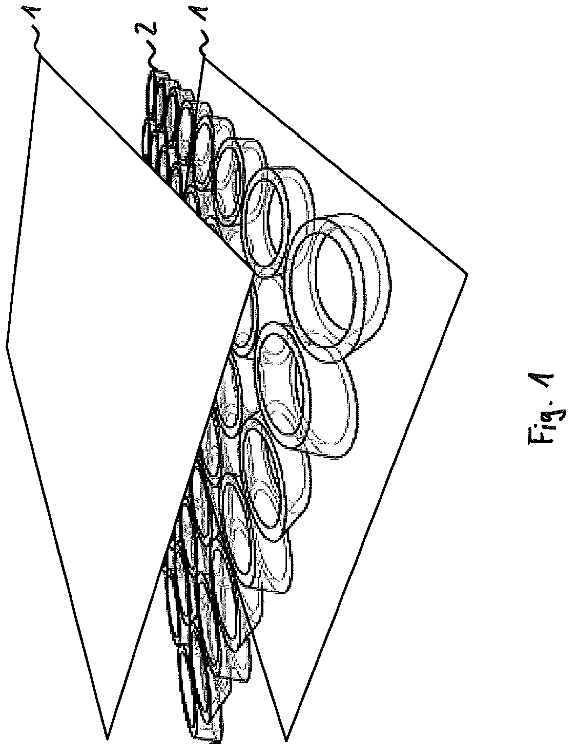

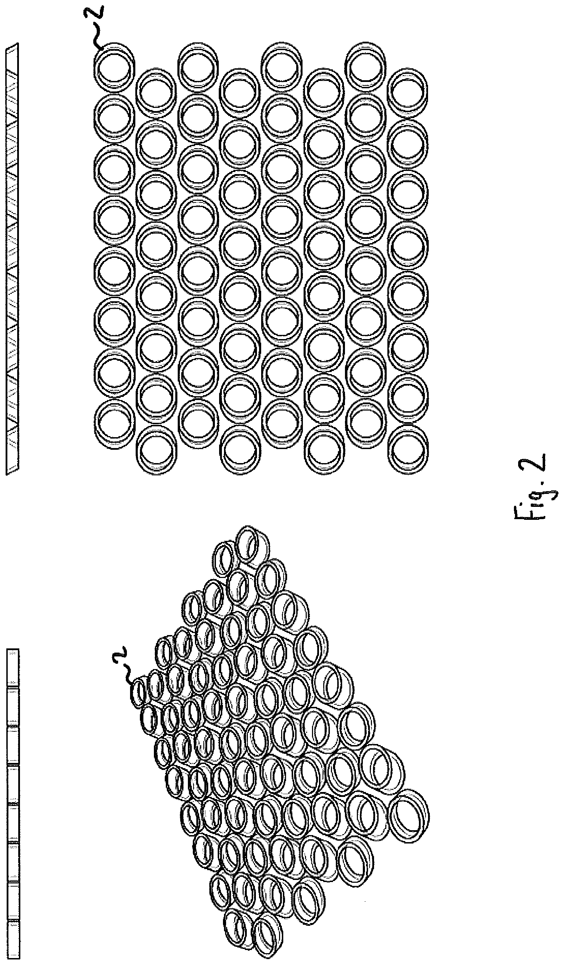

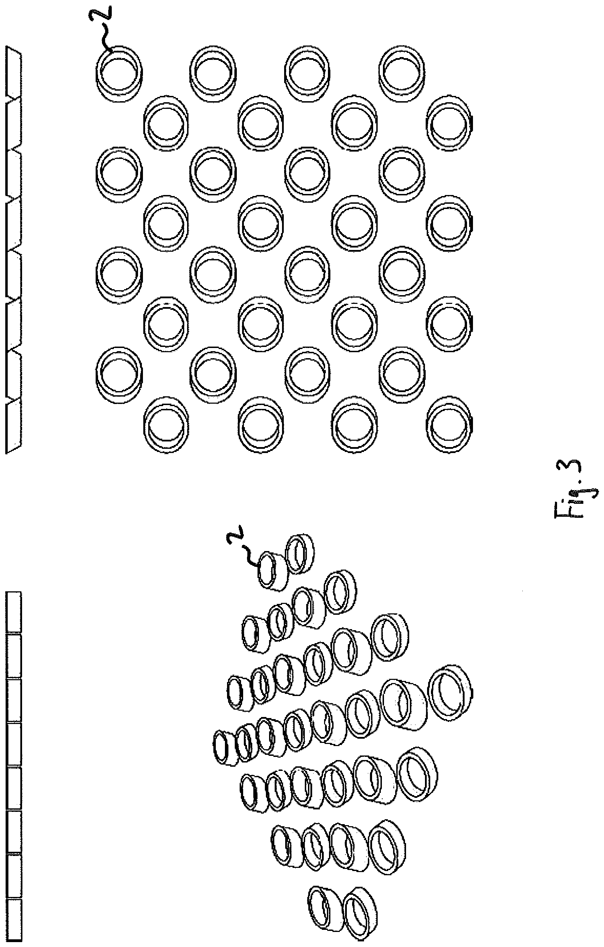

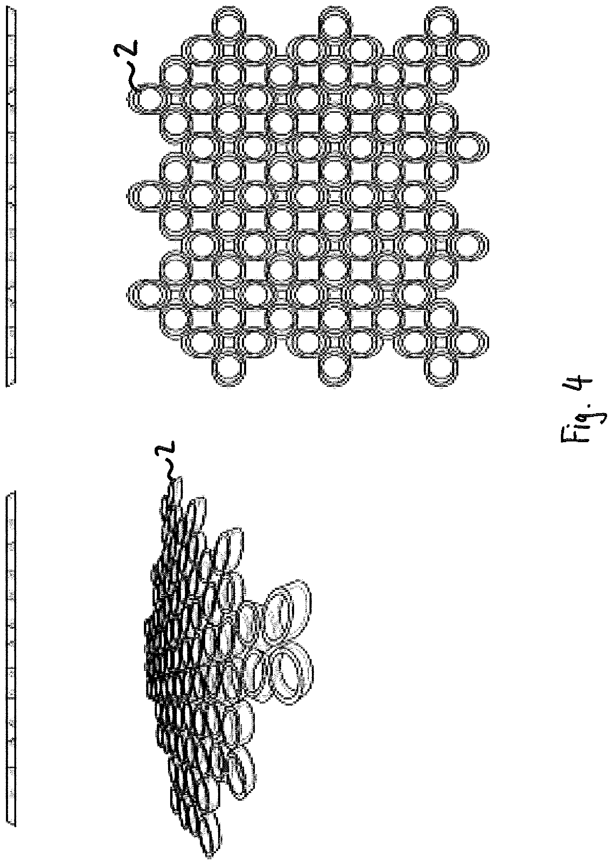

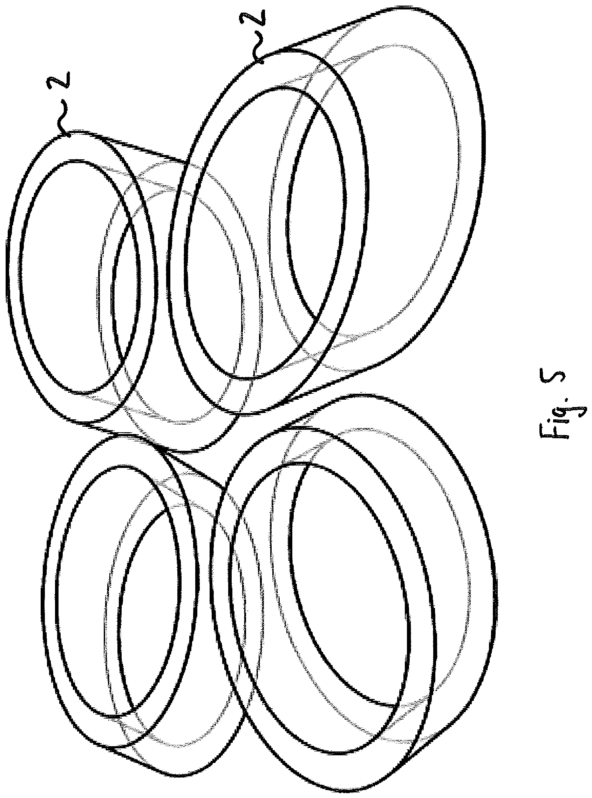

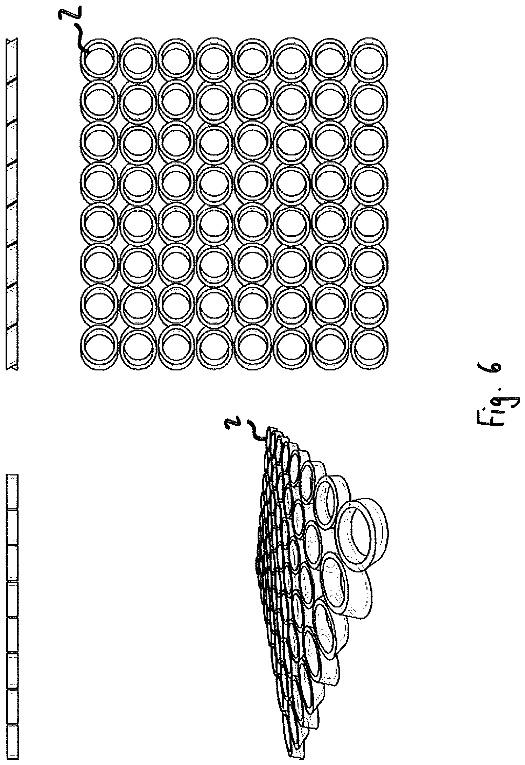

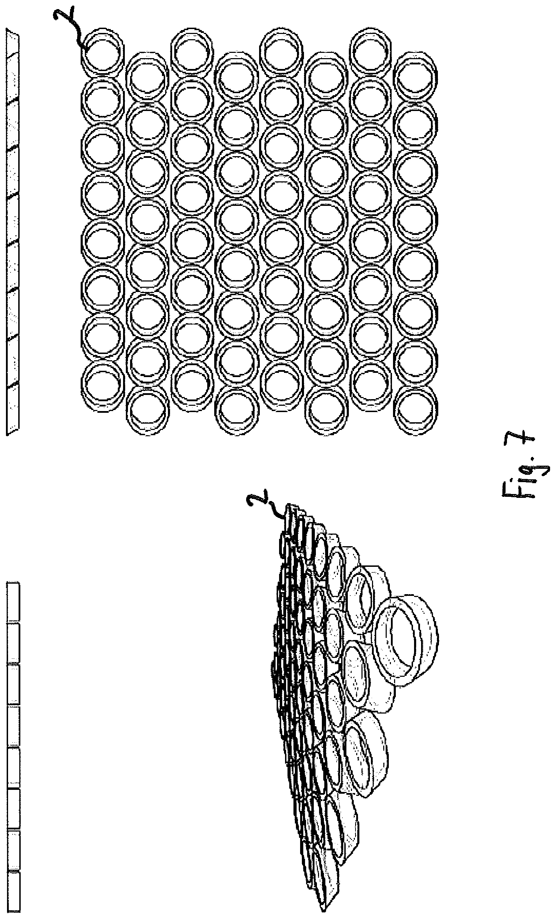

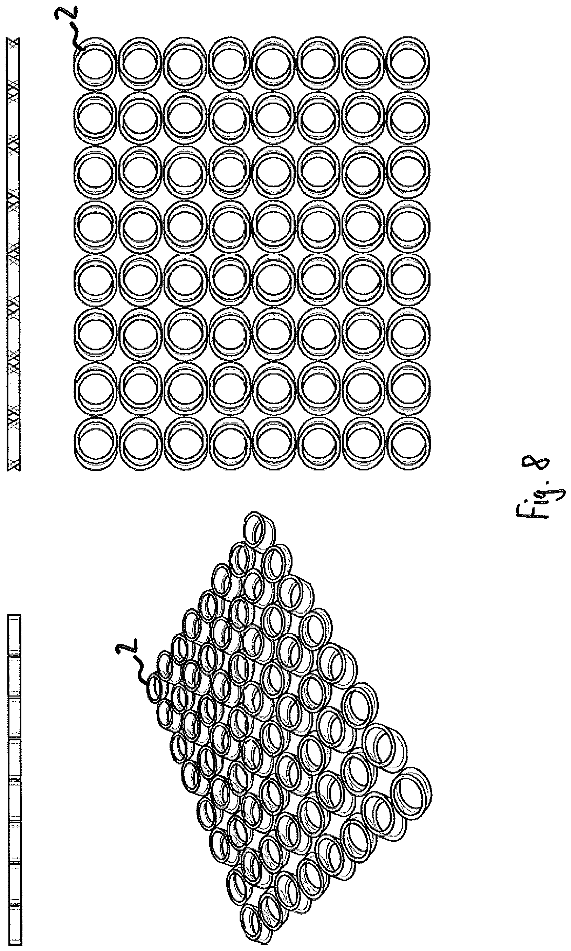

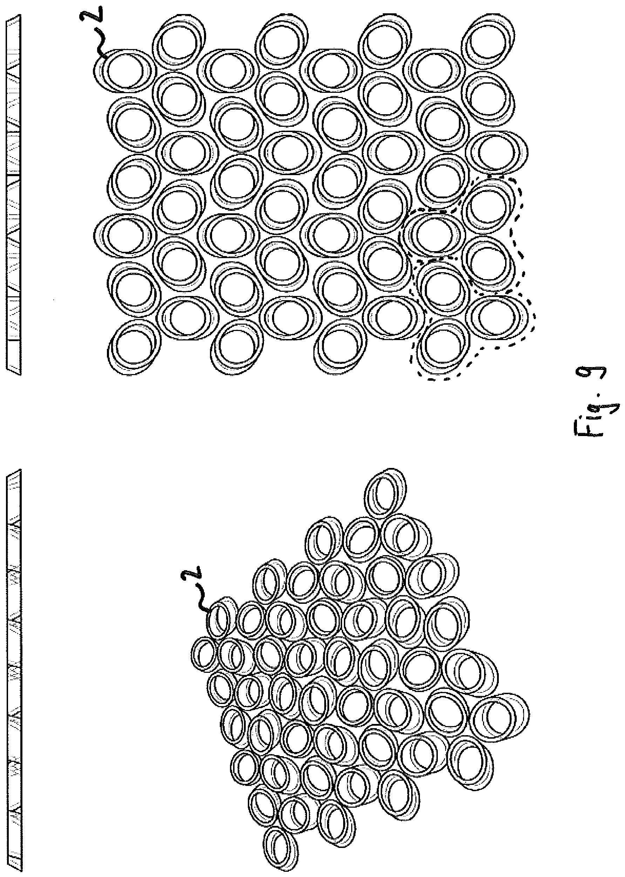

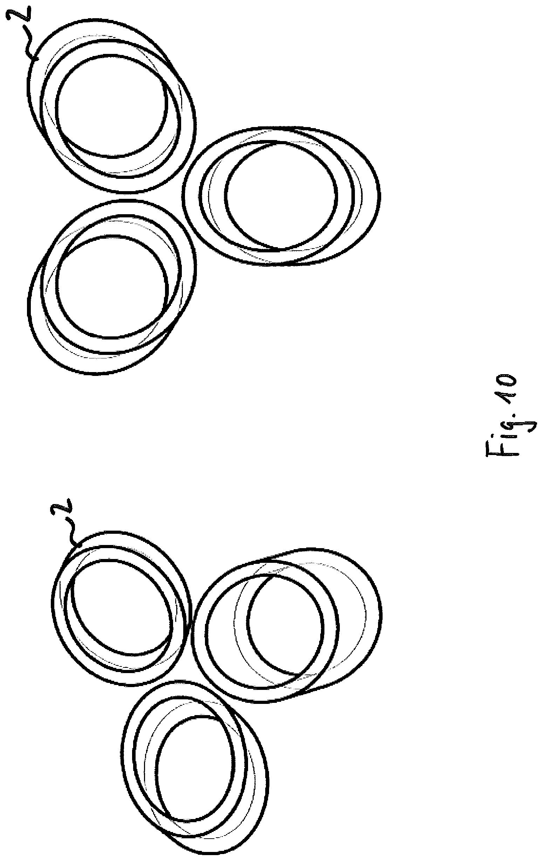

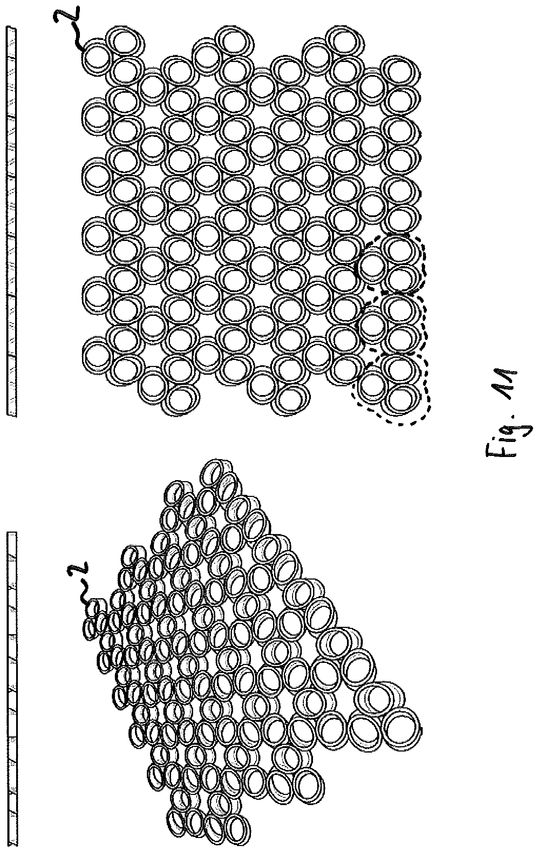

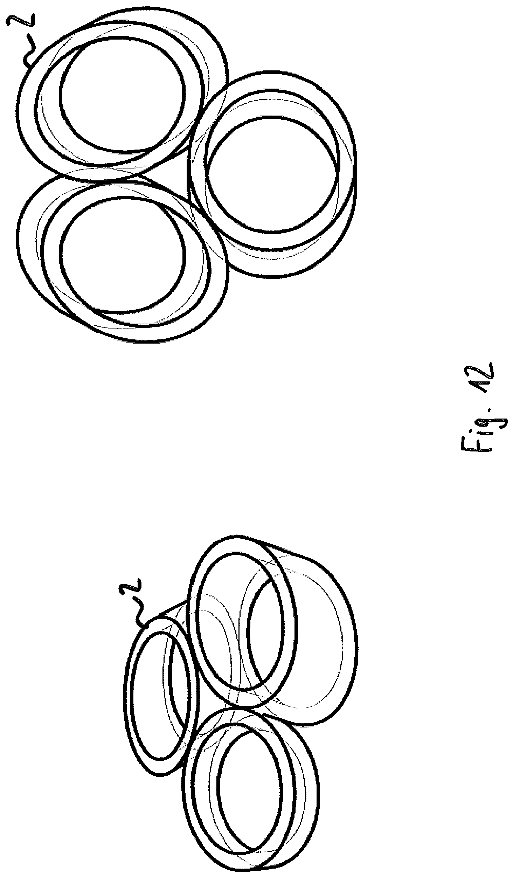

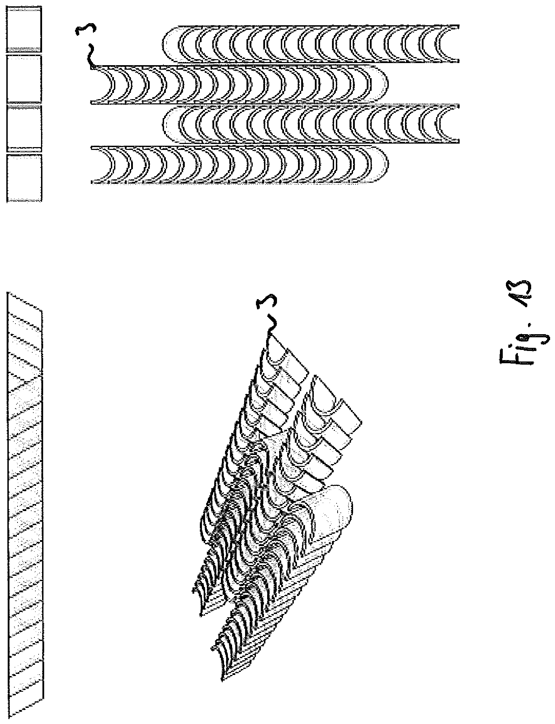

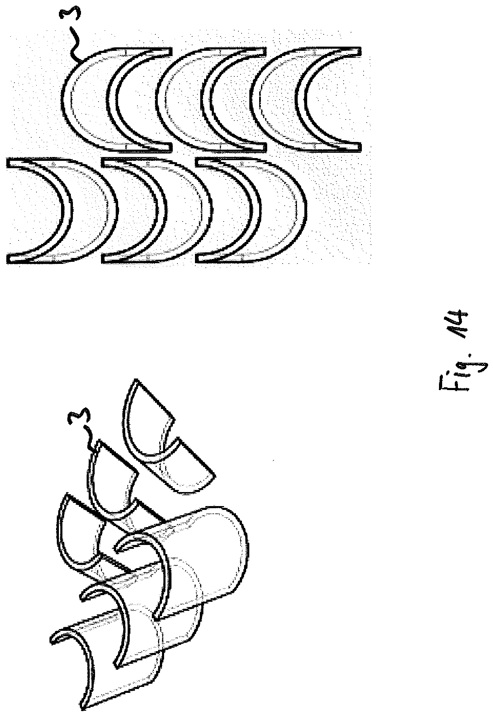

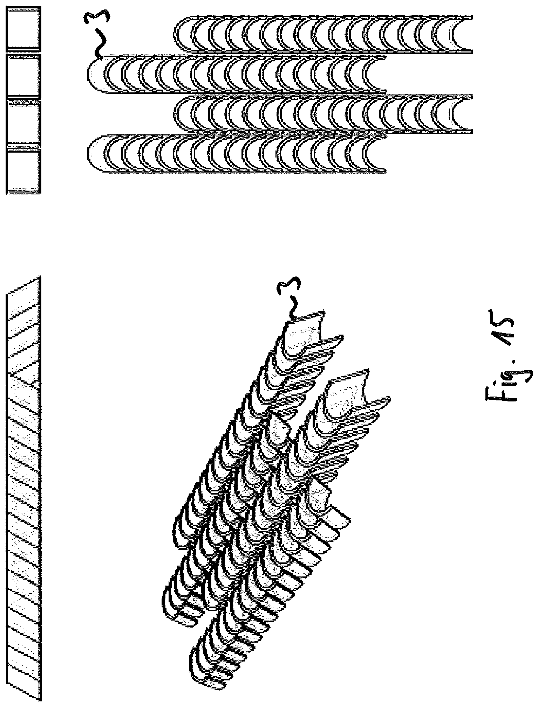

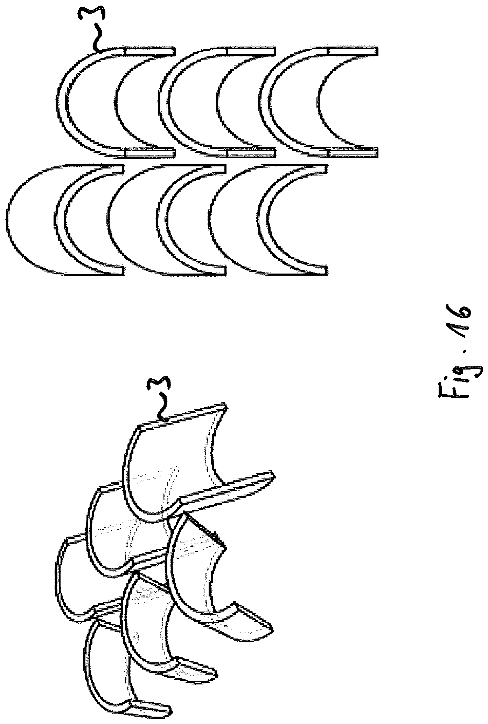

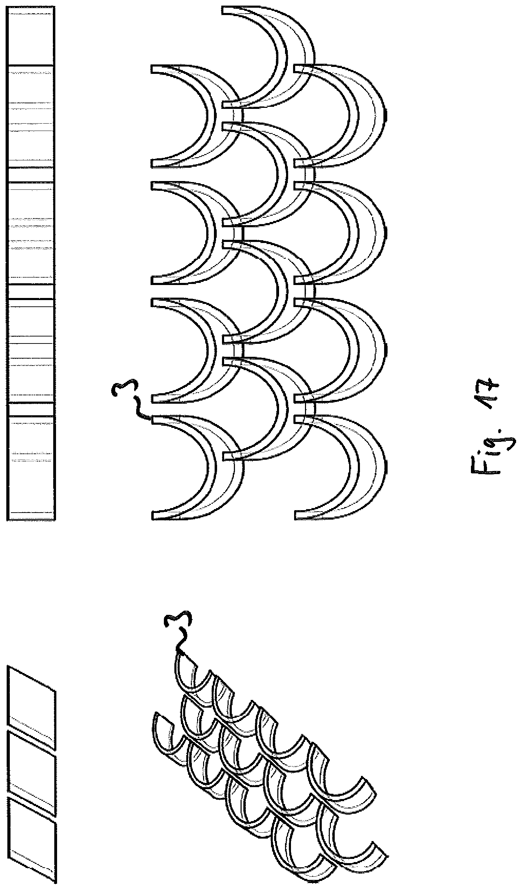

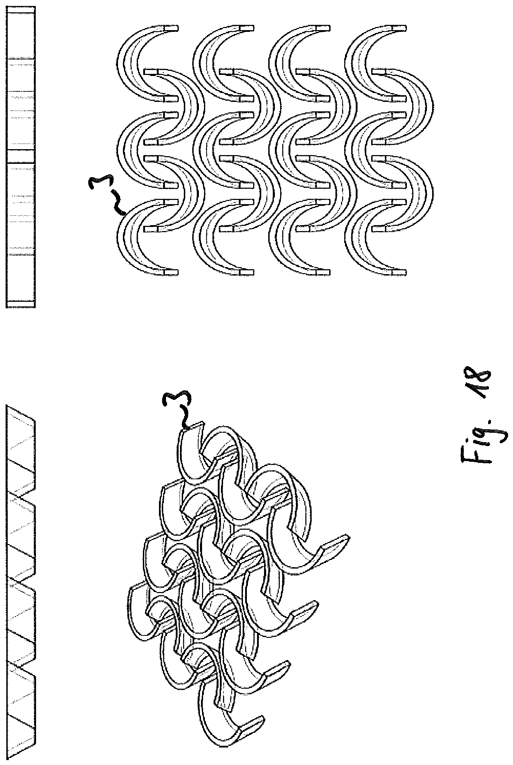

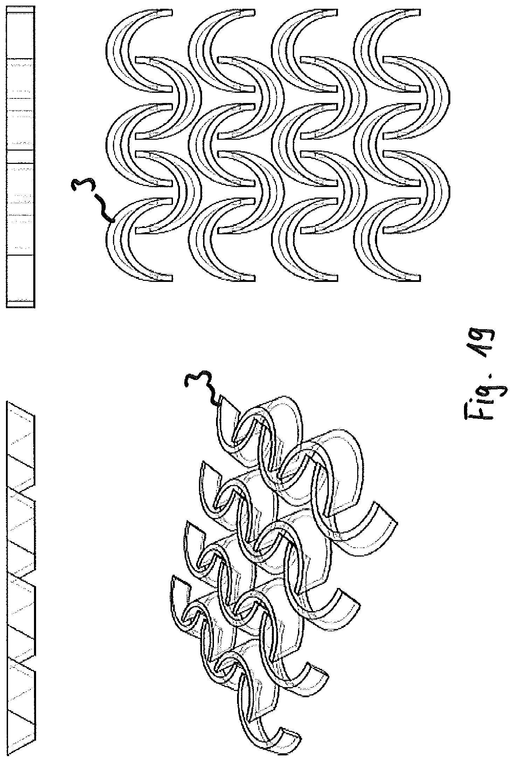

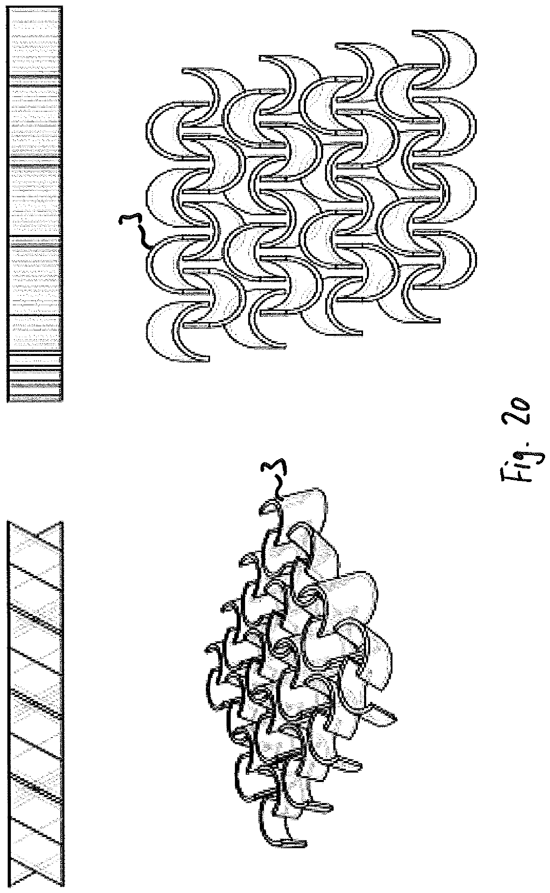

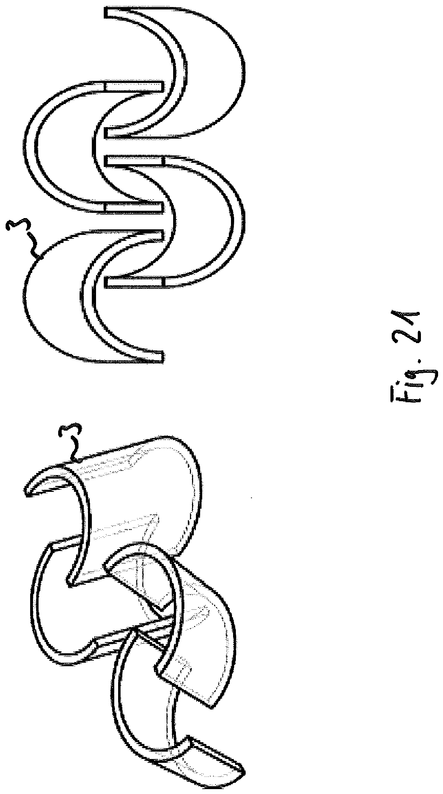

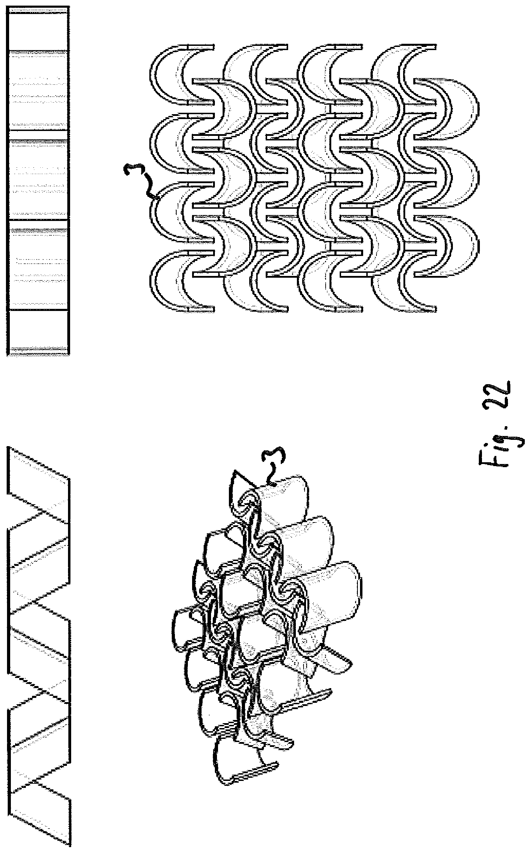

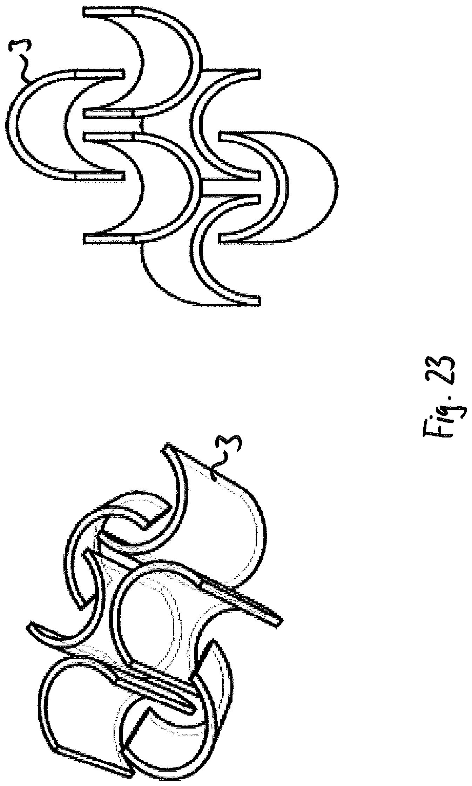

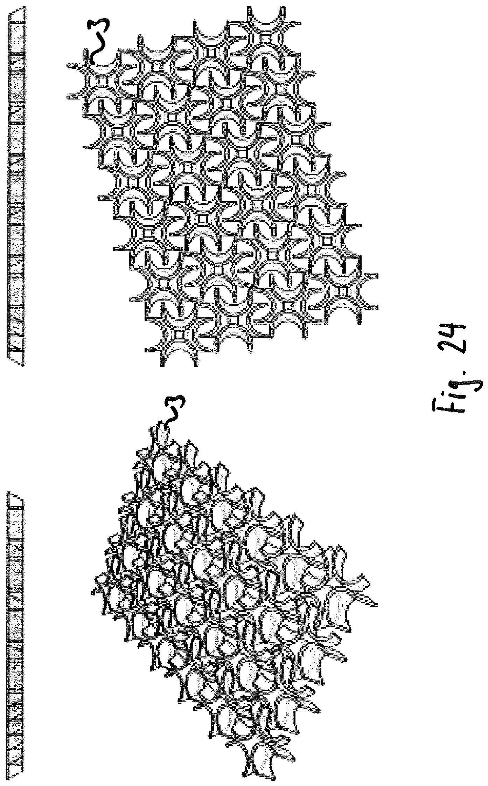

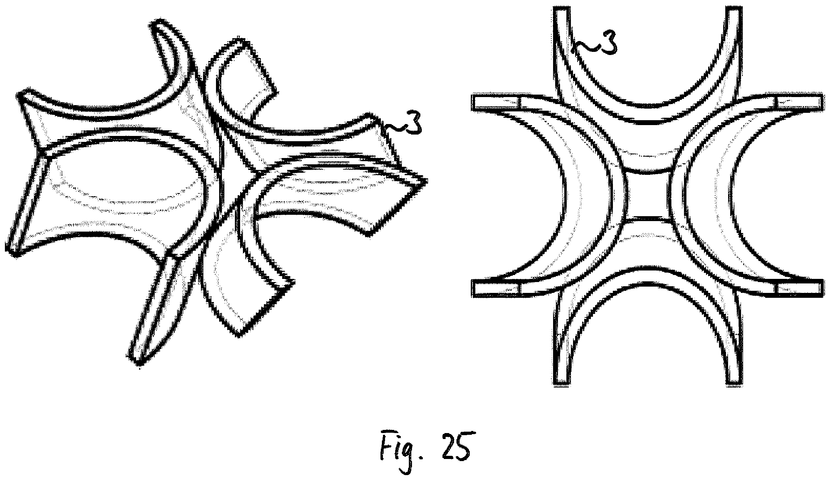

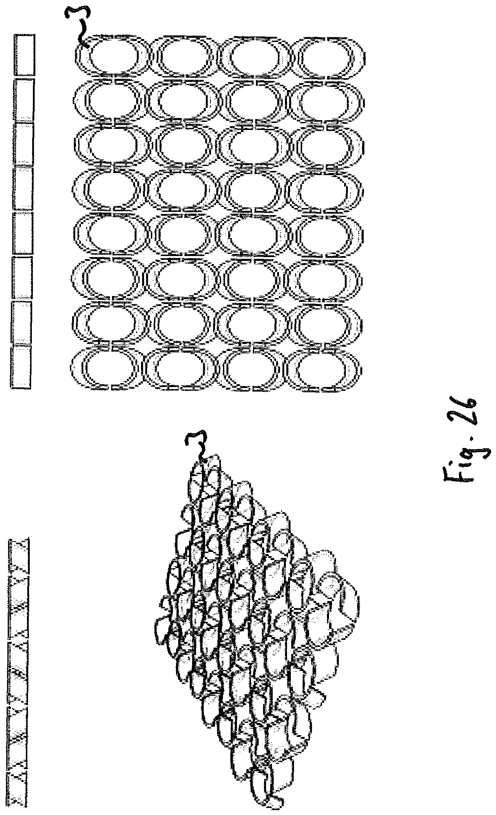

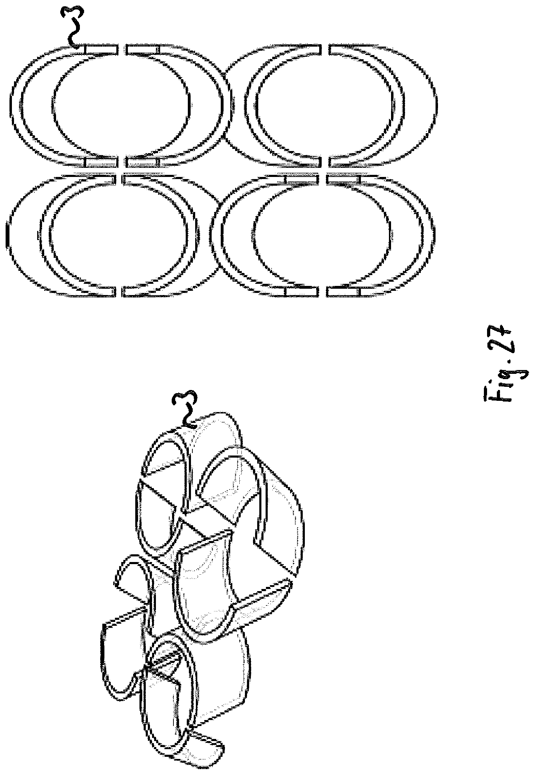

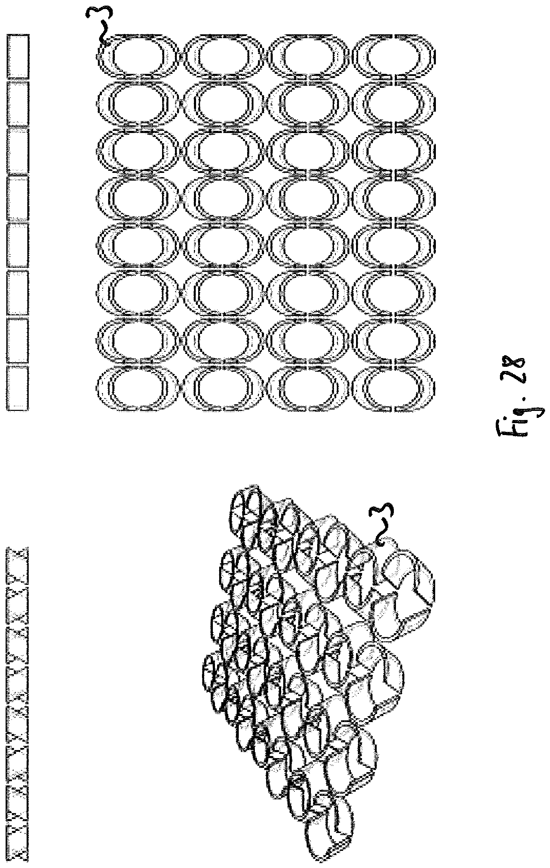

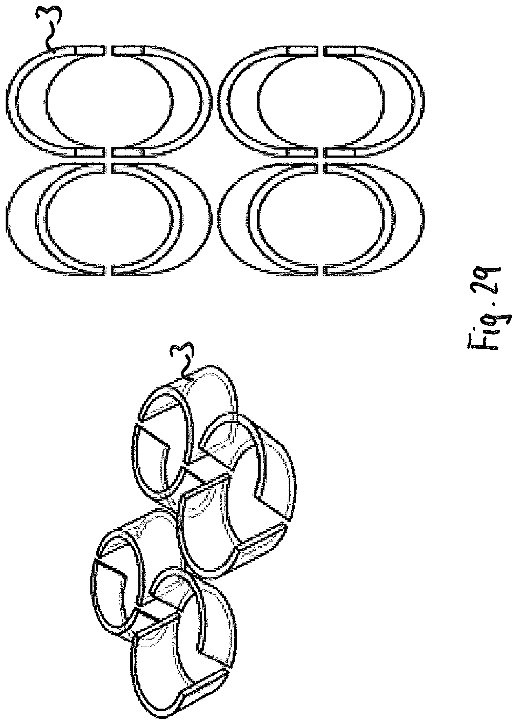

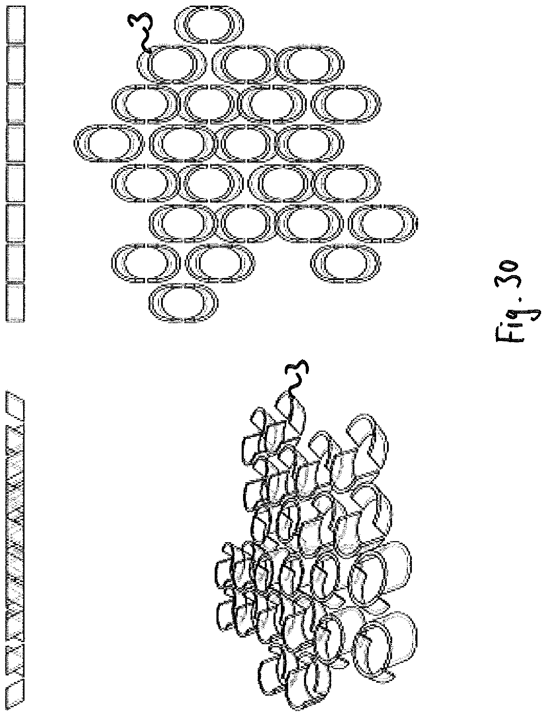

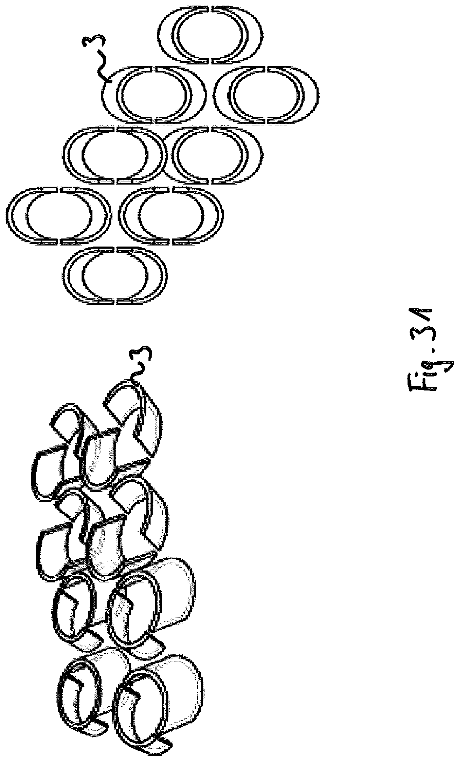

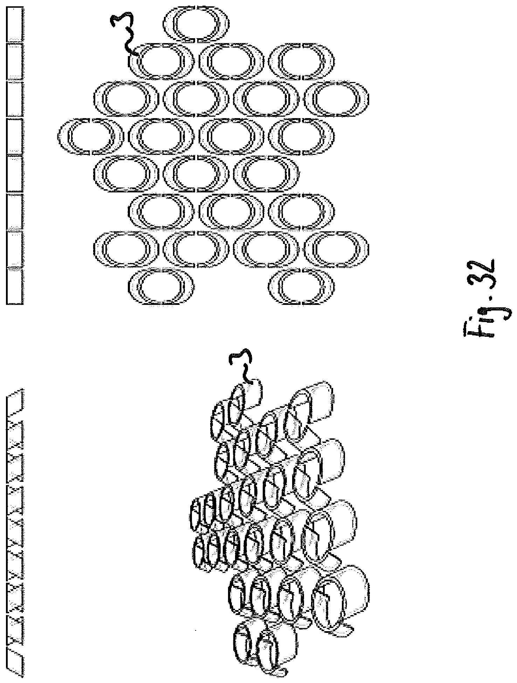

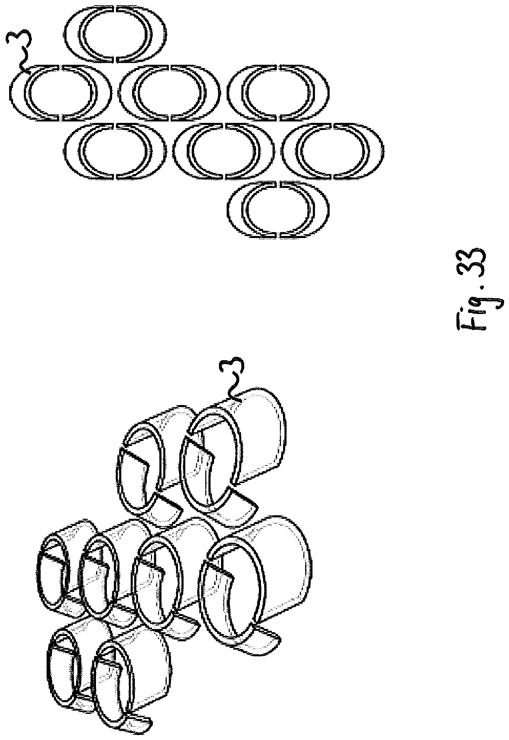

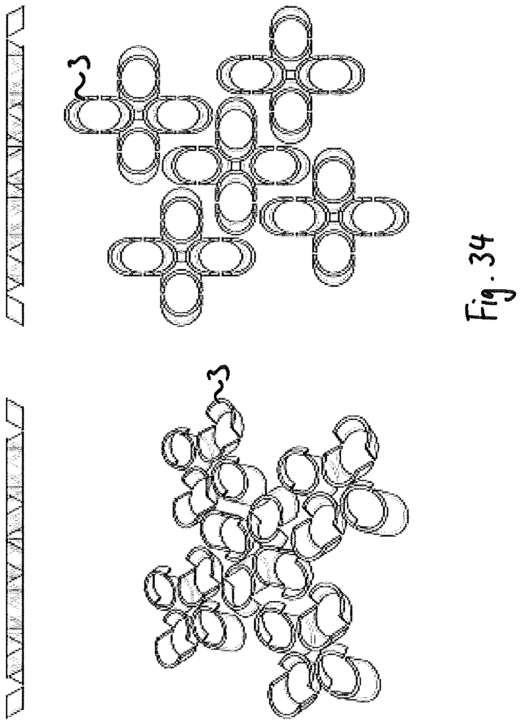

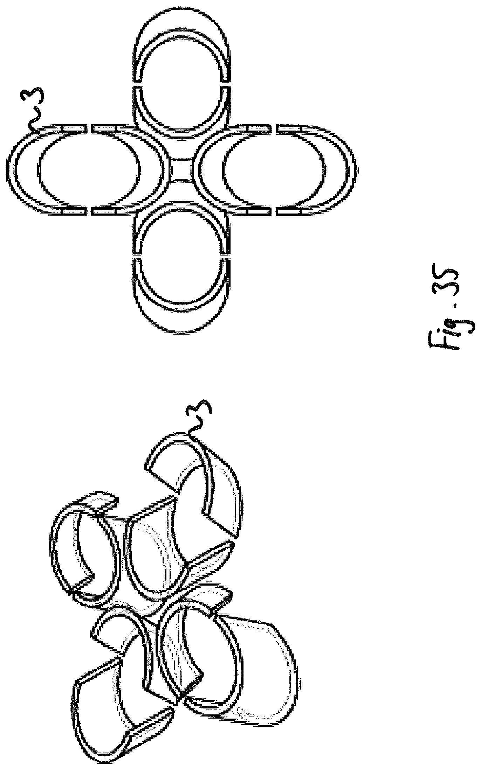

Die Verbundanordnung soll nachfolgend anhand beispielhafter Ausführungsformen näher erläutert werden. Zur Verdeutlichung dienen die beigefügten Figuren 1 bis 35, wobei die Figuren 1 bis 16 keine erfindungsgemäßen Ausführungsformen zeigen.

Es werden für gleiche oder gleichwirkende Teile die selben Bezugszeichen verwendet.

Es zeigt:
Fig. 1 eine Sprengdarstellung einer beispielhaften Verbundanordnung,
Fig. 2 eine Anordnung der röhrenförmigen Elemente in einem hexagonalen Gitter mit einem elementweise alternierenden Orientierungsmuster,
Fig. 3 eine Anordnung der röhrenförmigen Elemente in einem quadratisch-versetzten Gitter mit einem zeilenweise alternierenden Orientierungsmuster,
Fig. 4 eine Anordnung der röhrenförmigen Elemente in einem quadratischen Gitter mit einem elementweise alternierenden Orientierungsmuster,
Fig. 5 einen vergrößerten Ausschnitt aus Fig. 4
Fig. 6 eine Anordnung der röhrenförmigen Elemente in einem quadratischen Gitter mit einem zeilenweise alternierenden Orientierungsmuster,
Fig. 7 eine Anordnung der röhrenförmigen Elemente in einem hexagonalen Gitter mit einem zeilenweise alternierenden Orientierungsmuster,
Fig. 8 eine Anordnung der röhrenförmigen Elemente in einem quadratischen Gitter mit einem elementweise alternierenden Orientierungsmuster,
Fig. 9 eine Anordnung der röhrenförmigen Elemente aus trigonal-zentrierten Einheiten in einer parkettierenden Packung,
Fig. 10 einen vergrößerten Ausschnitt aus Fig. 9,
Fig. 11 eine Anordnung der röhrenförmigen Elemente aus trigonal-rotierenden Einheiten in einer hexagonalen Gitteranordnung,
Fig. 12 einen vergrößerten Ausschnitt aus Fig. 10,
Fig. 13 eine Anordnung halbierter röhrenförmiger Elemente in einer linearen Anordnung mit zeilenweise alternierender und gedrehter Orientierung,
Fig. 14 vergrößerte Ausschnitte aus Fig. 13,
Fig. 15 eine Anordnung halbierter röhrenförmiger Elemente in einer linearen Anordnung mit zeilenweise alternierender und ungedrehter Orientierung,
Fig. 16 vergrößerte Ausschnitte aus Fig. 15,
Fig. 17 eine Anordnung halbierter röhrenförmiger Elemente in einer hexagonalen Anordnung mit gleichgerichteter und ungedrehter Orientierung,
Fig. 18 eine Anordnung halbierter röhrenförmiger Elemente in einer hexagonalen Anordnung mit zeilenweise alternierender und gedrehter Orientierung mit ineinander greifenden Elementen,
Fig. 19 eine Anordnung halbierter röhrenförmiger Elemente in einer hexagonalen Anordnung mit zeilenweise alternierender und gedrehter Orientierung mit ineinander greifenden Elementen in einer invertierten Anordnung,
Fig. 20 eine Anordnung halbierter röhrenförmiger Elemente in einer hexagonalen Anordnung mit gleichbleibender aber gedrehter Orientierung mit ineinander greifenden Elementen,
Fig. 21 vergrößerte Ausschnitte aus Fig. 20,
Fig. 22 eine Anordnung halbierter röhrenförmiger Elemente in einer hexagonalen Anordnung mit einer in jeder zweiten Zeile alternierenden und in jeder Zeile gedrehten Orientierung mit ineinander greifenden Elementen,
Fig. 23 vergrößerte Ausschnitte aus Fig. 22,
Fig. 24 eine Anordnung halbierter röhrenförmiger Elemente in zentrierten Einheiten zu je vier Elementen,
Fig. 25 vergrößerte Ausschnitte aus Fig. 24,
Fig. 26 eine Anordnung halbierter röhrenförmiger Elemente in einer quadratischen Gitteranordnung mit einer in jeder zweiten Zeile alternierenden und in jeder Zeile gedrehten Orientierung mit nicht ineinander greifenden Elementen,
Fig. 27 vergrößerte Ausschnitte aus Fig. 26,
Fig. 28 eine Anordnung halbierter röhrenförmiger Elemente in einer quadratischen Gitteranordnung mit einer in jeder Zeile alternierenden und in jeder Zeile gedrehten Orientierung mit nicht ineinander greifenden Elementen,
Fig. 29 vergrößerte Ausschnitte aus Fig. 28,
Fig. 30 eine Anordnung halbierter röhrenförmiger Elemente in einer hexagonalen Gitteranordnung mit einer in jeder Zeile alternierenden und in jeder Zeile gedrehten Orientierung mit nicht ineinander greifenden Elementen,
Fig. 31 vergrößerte Ausschnitte aus Fig. 30,
Fig. 32 eine Anordnung halbierter röhrenförmiger Elemente in einer hexagonalen Gitteranordnung mit je zwei sich gegenüberstehenden gedrehten und unterschiedlich orientierten Elementen,
Fig. 33 vergrößerte Ausschnitte aus Fig. 32,
Fig. 34 eine Anordnung, zusammengesetzt aus Einheiten zu je vier Paaren mit jeweils zwei gegensätzlich orientierten und gedrehten Elementen, wobei die Einheiten miteinander verschachtelt sind,
Fig. 35 vergrößerte Ausschnitte aus Fig. 34.

Fig. 1 zeigt den grundsätzlichen Aufbau einer Verbundanordnung anhand eines sehr einfachen Beispiels in einer Sprengdarstellung. Die Verbundanordnung besteht aus zwei Deckflächen 1, zwischen die röhrenförmige Elemente 2 als Distanz- und Versteifungsmittel sandwichartig eingeschlossen sind. Die Deckflächen bestehen aus einem ansich beliebigen Material. Bevorzugt wird Holz, ein Holzverbundmaterial, ein Textil, ein Fasermaterial, ein Folienmaterial oder Kombinationen aus den benannten Materialien verwendet. Die röhrenförmigen Elemente sind mit den Deckflächen verleimt oder, bei der Verwendung metallischer Materialien für die röhrenförmigen Elemente und die Deckflächen auch verlötet. Bevorzugt wird für die röhrenförmigen Elemente auf Holz, besser aber noch auf Bambus zurückgegriffen.

Wesentlich ist, dass die röhrenförmigen Elemente schräg angeschnitten sind. Man erhält diese in einfacher Weise, indem ein Bambusstab in einem Winkel zu dessen Längsachse in einer Reihe äquidistanter Schnitte zu den röhrenförmigen Elementen vereinzelt wird. Daher nehmen die Längsachsen der röhrenförmigen Elemente zu den Oberflächennormalen der Deckflächen einen gewissen Winkel ein.

Wie die erfindungsgemäßen Figuren zeigen, sind die röhrenförmigen Elemente auch in deren Längsrichtung geteilt. Es sind in einem solchen Fall somit halbierte, gedrittelte oder sonstwie unterteilte Elemente zwischen den Deckplatten angeordnet.

Bedingt durch die abgeschrägte Gestaltung der röhrenförmigen Elemente und die dadurch entstehende Asymmetrie sind nun eine Vielzahl von Anordnungen dieser Elemente zwischen den Deckplatten möglich, von denen einige in den beigefügten Figuren beispielhaft dargestellt sind. Dabei bezeichnet die durch die abgeschrägte Gestaltung der röhrenförmigen Elemente entstehende Neigung bezüglich einer frei definierten Richtung die Orientierung der röhrenförmigen Elemente. Diese kann in der Abhängigkeit vom Ort, an welchem sich das betreffende Element auf der Deckplatte befindet, wechseln.

Außerdem können die röhrenförmigen Elemente zu verschiedenen Gitterstrukturen und Mustern zusammengefügt oder gruppiert sein.

Werden halbierte bzw. geteilte röhrenförmige Elemente verwendet, erhöht sich die Zahl der möglichen Anordnungen der Elemente um ein Vielfaches. Durch die von der runden Form abweichenden Gestaltung der halbierten Elemente und die grundsätzlich frei variierbare Schnittführung der Längsschnitte bei den halbierten bzw. geteilten Elementen entstehen mannigfaltige Gestaltungsparameter und Formen für die röhrenförmigen Elemente und schließlich eine Vielzahl möglicher Anordnungen, von denen in den Figuren einige beispielhaft gezeigt sind.

Diese Vielzahl an Anordnungen, Gitterstrukturen, Orientierungen und Drehungen der röhrenförmigen Elemente bedingt eine sehr große Anpassungsbreite der Verbundanordnung hinsichtlich der zu erwartenden mechanischen Belastungen, der dafür geforderten Biege- und Verwindungssteifigkeiten, aber auch eine hohe Variabilität in Hinblick auf wärme- und/oder schalldämmende Eigenschaften der Anordnungen. Es versteht sich darüber hinaus von selbst, dass mehr als nur zwei Deckplatten verwendet werden können und dass der in Fig. 1 und den übrigen Figuren gezeigte Aufbau auch in einem größeren Sandwichstapel fortgesetzt und variiert werden kann.

Weitere Ausführungsformen ergeben sich im Rahmen fachmännischen Handelns.

### Bezugszeichenliste

1 Deckplatte
2 röhrenförmiges Element
3 röhrenförmiges Element, geteilt.

## Patentansprüche

1. Verbundanordnung, aus mindestens zwei parallelen Deckplatten (1) mit zwischen den Deckplatten eingeschlossenen und mit den Deckplatten verbundenen Distanz- und Versteifungsmitteln,
wobei
die Distanz- und Versteifungsmittel in Form röhrenförmiger Elemente (2) ausgebildet ist, wobei die Rohrlängsachsen der röhrenförmigen Elemente schräg zu den Oberflächennormalen der parallelen Deckplatten orientiert sind, **dadurch gekennzeichnet, dass**
die röhrenförmigen Elemente geteilt, insbesondere halbiert und als längs aufgeschnittene und zueinander beabstandete Zylindersegmente (3) ausgebildet sind.

2. Verbundanordnung nach Anspruch 1,
**dadurch gekennzeichnet, dass**
die Rohrlängsachsen der röhrenförmigen Elemente (2) eine ortsabhängige Orientierung aufweisen.

3. Verbundvorrichtung nach einem der vorhergehenden Ansprüche,
**dadurch gekennzeichnet, dass**
die rohrförmigen Elemente als Holz- oder Bambusrohre ausgebildet sind.

4. Verbundvorrichtung nach einem der vorhergehenden Ansprüche,
**dadurch gekennzeichnet, dass**
die Deckplatten (1) aus einem Holzwerkstoff oder Holzverbundwerkstoff, einem Faser- oder Faserverbundwerkstoff, einem Textilwerkstoff oder einem Folienwerkstoff ausgebildet sind.

5. Verbundvorrichtung nach einem der vorhergehenden Ansprüche,
**dadurch gekennzeichnet, dass**
die röhrenförmigen Elemente (2) zusammen mit den Deckplatten (1) einen in ein Folienmaterial eingeschweißten Verbund bilden.

## Claims

1. A composite arrangement; comprising:
at least two parallel cover plates; and
spacer and stiffener devices that are enclosed between the cover plates and connected with the cover plates,
wherein the spacer and stiffener devices are configured as tubular elements (2),
wherein tube longitudinal axes of the tubular elements are oriented at a slant angle relative to surface orthogonal lines of the at least two parallel cover plates,
**characterized in that** the tubular elements are divided, in particular divided in half and configured as longitudinally cut cylinder segments (3) that are offset from each other.

2. The composite arrangement according to claim 1,
**characterized in that**
the tube longitudinal axes of the tubular elements (2) are oriented as a function of a location of the tubular elements (2).

3. The composite device according to one of the preceding claims,
**characterized in that**
the tubular elements are configured as wood or bamboo tubes.

4. The composite device according to one of the preceding claims,
**characterized in that**
the cover plates (1) are made from a wood material or wood composite material, a fiber or fiber composite material, a textile material or a foil material.

5. The composite device according to one of the preceding claims,
**characterized in that**
the tubular elements (2) together with the cover plates (1) form a composite that is welded in a foil material.

## Revendications

1. Structure composite d'au moins deux panneaux de couverture parallèles (1) avec des pièces d'écartement et de raidissage enfermées entre les panneaux de couverture et reliées aux panneaux de couverture, dans laquelle
les pièces d'écartement et de raidissage sont réalisées sous la forme d'éléments tubulaires (2), les axes longitudinaux des éléments tubulaires étant orientés en oblique par rapport aux normales aux surfaces des panneaux de couverture parallèles,
**caractérisée en ce que**
les éléments tubulaires sont réalisés de manière divisée, en particulier divisés en deux et sous la forme de segments de cylindre (3) coupés longitudinalement et écartés les uns des autres.

2. Structure composite selon la revendication 1,
**caractérisée en ce que**
les axes longitudinaux des éléments tubulaires (2) présentent une orientation qui dépend de la localisation.

3. Structure composite selon l'une des revendications précédentes,
**caractérisée en ce que**
les éléments tubulaires sont réalisés sous forme de tubes en bois ou en bambous.

4. Structure composite selon l'une des revendications précédentes,
**caractérisée en ce que**
les panneaux de couverture (1) sont réalisés en un matériau à base de bois ou en un matériau composite à base de bois, un matériau à base de fibres ou un matériau composite à base de fibres, un matériau à base textile ou en un matériau en feuille.

5. Structure composite selon l'une des revendications précédentes,
**caractérisée en ce que**
les éléments tubulaires (2) forment, conjointement avec les panneaux de couverture (1), un composite scellé dans un matériau en feuille.
